# EUROPÄISCHE PATENTSCHRIFT

(11) **EP 1 642 700 B1**
(45) Veröffentlichungstag und Bekanntmachung des Hinweises auf die Patenterteilung: **09.01.2008**
(21) Anmeldenummer: 05020645.7
(22) Anmeldetag: 22.09.2005
(51) Int. Cl.: B29C 65/00, B65B 51/30, B65B 9/20

(54) **Verfahren und Vorrichtung zum Bewegen einer Schweissbacke**
Method and apparatus for moving a sealing jaw
Procédé et dispositif pour déplacer une machoire de soudage

(30) Priorität: 28.09.2004 DE 102004046972
(43) Veröffentlichungstag der Anmeldung: 05.04.2006
(73) Patentinhaber: ROVEMA VERPACKUNGSMASCHINEN GMBH, 35463 Fernwald (DE)
(72) Erfinder: Kammler, Roman, Dr., 67547 Worms (DE); Baur, Walter, Dr., 63584 Gründau (DE)

(56) Entgegenhaltungen:
- EP-A- 0 560 988
- EP-A- 1 001 186
- DE-A1- 4 425 207
- DE-A1- 19 535 510
- DE-A1- 19 630 420
- US-A- 5 117 612

## Beschreibung

Die vorgeschlagene Neuerung betrifft den Verpackungsmaschinenbau und dort ein Verfahren zum Bewegen einer Schweißbacke, insbesondere einer Schweißbacke einer Quersiegelstation einer vertikalen Schlauchbeutelmaschine, sowie eine derart betriebene vertikale Schlauchbeutelmaschine.

Aus der DE 44 25 207 A ist es bekannt, eine Schweißbacke einer Quersiegelstation einer vertikalen Schlauchbeutelmaschine entlang einer geschlossenen Bahn zu bewegen. Dabei weist die Bahn einen geraden Abschnitt auf, welcher zum Anliegen an einem zwischen der Schweißbacke und einer zweiten, gegenläufigen Schweißbacke zusammengedrückten Folienschlauches vorgesehen ist. Dabei werden der Folienschlauch und die Schweißbacke in Richtung des geraden Abschnittes mit gleicher Geschwindigkeit weiterbewegt, um den Folienschlauch durch die Wärmeeinwirkung der Schweißbacken innerhalb einer Siegelzeit zu verschweißen. Zwei in senkrecht zueinander verlaufende Richtungen wirkende, die Schweißbacke bewegende Antriebe dienen der Erzeugung einer Umlaufbewegung der Schweißbacke, wobei innerhalb einer Zykluszeit ein vollständiger Backenumlauf erreicht wird. Der Oberbegriff des Anspruchs 1 entspricht diesem Stand der Technik.

Die bekannte Schlauchbeutelmaschine hat den Nachteil, dass die Bahnkurven nur an sich geändert werden können, nicht aber einzelne Abschnitte der Bahn mitsamt den dort zu nutzenden Geschwindigkeiten und Beschleunigungen pro Punkt der Bahn. Damit sind Zusatzoptionen und beliebige Bahnveränderungen bzw. Bewegungsprofile nicht möglich.

Der Erfindung liegt die Aufgabe zu Grunde, bei einem Verfahren gemäß dem Oberbegriff des Anspruchs 1 beliebige Bahnkurven und Bewegungsprofile ohne technische Umrüstung realisieren zu können.

Gelöst ist die Aufgabe gemäß dem kennzeichnenden Teil des Anspruchs 1. Danach werden die Antriebe derart betrieben, wobei entweder beide Antriebe gleichzeitig betrieben werden oder nur einer der Antriebe genutzt wird, damit einem Bewegungspunkt der Schweißbacke in jedem die Bahn beschreibenden Punkt frei wählbar eine vorgegebene Geschwindigkeit und eine vorgegebene Beschleunigung in Richtung einer frei gewählten Bewegungsrichtung des Bewegungspunktes zugeordnet wird.

Das vorgeschlagene Verfahren hat den Vorteil, dass eine punktgenaue Ansteuerung mit entsprechenden Beschleunigungs- und Geschwindigkeitskomponenten dieses Punktes verbunden wird. Somit ist sowohl ein Weg-Zeit-Diagramm als auch ein Geschwindigkeits-Zeit-Diagramm und in diesem Zusammenhang auch ein Weg-Geschwindigkeits- und ein Weg-Beschleunigungs-Diagramm für den Bewegungspunkt gegeben. In analoger Weise ist auch ein funktioneller Zusammenhang zwischen Geschwindigkeit und Beschleunigung frei programmierbar und somit steuerbar. Somit sind beliebige Zusatzfunktionen (Folienvorwärmen, Folienabstreifen, Folienkühlen) bei beliebigen Funktionsabläufen (Siegeln, Backenzurücksetzen) möglich. Auch Verhältnisse und prozentuale Zeitanteile für bestimmte Funktionen und Zusatzfunktionen können frei ausgewählt werden. Die frei wählbaren Parameter führen dabei zu einer funktionellen Anpassung der übrigen Parameter. Aber auch diese Anpassung kann im Rahmen mehrerer Möglichkeiten noch wählbar sein.

Weitere, vorteilhafte Ausgestaltungen des vorgeschlagenen Verfahrens sind in den Ansprüchen 2 bis 5 beschrieben.

Das Verfahren ist besonders zum Betreiben einer vertikalen Schlauchbeutelmaschine geeignet, wobei die Schweißbacke einen Folienschlauch mittels Quemähten verschweißt, und mittels einer Trenneinrichtung jeweils ein Schlauchbeutel mit einer bestimmten Beutellänge vom Folienschlauch abgetrennt wird (Anspruch 2). Eine dazu geeignete Vorrichtung ist eine vertikale Schlauchbeutelmaschine gemäß Anspruch 6.

Sind beide Antriebe getriebelos miteinander und mit der Schweißbacke verbunden (Anspruch 7), so ist eine direkte Umsetzung der zeitgenau angesteuerten Ortskoordinaten der Antriebe ohne Getriebe wie Kurbel, Zahnstange oder Riemen und ohne Übersetzung möglich.

Ist gemäß Anspruch 8 dabei die Schweißbacke über eine starre Verbindung mit dem beweglichen Teil eines horizontal wirkenden Antriebs verbunden, und das antreibende Teil dieses Antriebs mit dem in vertikaler Richtung beweglichen Teil des anderen Antriebs starr verbunden (Anspruch 8), so kommt keine Elastizität zwischen den Antrieben und der Schweißbacke vor. Folglich ist ein sehr exaktes, auf Bruchteile eines Millimeters genaues Versetzen der Schweißbacke möglich. Mit dieser Technik kann ein weiteres Verfahrensmerkmal erreicht werden, wonach der Bewegungspunkt mit einer Genauigkeit von 0,01 bis 0,1 mm hinsichtlich seiner Ortskoordinaten in den Richtungen vorgewählt wird (Anspruch 3).

Gemäß Anspruch 4 kann ein Siegelweg vorgegeben werden, welcher sich aus einer Vorwärmstrecke oder einer Abstreifstrecke (Strippweg) für ein Vorwärmen oder Abstreifen (mittels einer Abstreifeinrichtung) des Gegenstandes mit vom Gegenstand beabstandeter Schweißbacke, dem eigentlichen, effektiven Siegelweg und wahlweise einer Kühlstrecke zum Abkühlen des Gegenstandes bei vom Gegenstand beabstandeter Schweißbacke, währenddessen Kühlluft von einem an der Schweißbacke vorgesehenen Kühlluftauslass auf den Gegenstand geblasen wird, zusammensetzt. Für das vorgeschlagene Verfahren und die vorgewählten Koordinaten spielt es keine Rolle, wie genau der Siegelweg in zeitlicher Abhängigkeit definiert ist. In jedem Fall wird eine Siegelzeit, die für den Siegelweg zur Verfügung gestellt wird, dazu genutzt, die Verschweißung auszuführen. Ob ein Teil dieses Siegelweges für eine Folienvorwärmung und, gegebenenfalls eine weitere Strecke des Siegelweges für eine Nahtkühlung verwendet wird, spielt für die freie Bestimmbarkeit aller Geschwindigkeits- und Ortsvorgaben keine Rolle. Da die Längen der Wege, entlang derer die Zusatzfunktionen neben den Funktionen ausgeübt werden, praktisch von Bedeutung ist, kann gemäß Anspruch 5 für die Vorwärmstrecke bzw. die Abstreifstrecke, den effektiven Siegelweg und wahlweise die Kühlstrecke jeweils ein bezüglich seiner Länge und seinen Ortskoordinaten frei wählbarer, parallel zum geraden Abschnitt verlaufender Abschnitt vorgesehen werden, auf dem sich der Bewegungspunkt entlang bewegt, damit von der Schweißbacke bzw. einer an ihr befestigten Zusatzeinrichtung die entsprechende Funktion ausgeübt wird.

Im folgenden werden das vorgeschlagene Verfahren und eine nach dem vorgeschlagenen Verfahren betreibbare vertikale Schlauchbeutelmaschine an Hand von Ausführungsbeispiele darstellenden Figuren näher beschrieben. Es zeigt:
- Figur 1: in einer Seitenansicht eine vertikale Schlauchbeutelmaschine mit gegeneinander bewegbaren Schweißbacken einer Quersiegelstation;
- Figur 2: in einer Seitenansicht zwei senkrecht zueinander wirkende Antriebe zum Bewegen eines Punktes A der einen Schweißbacke der Figur 1 entlang einer umlaufenden Bahn;
- Figur 3: in einer schematischen Darstellung den Umlauf zweier gegeneinander bewegbarer, entlang eines effektiven Siegelweges Zseff den Folienschlauch der Figur 1 verschweißenden Schweißbacken, sowie
- Figur 4: in einer schematischen Darstellung den Schweißbackenumlauf entsprechend Figur 3, jedoch mit einem um eine Vorwärmstrecke und eine Kühlstrecke reduzierten effektiven Siegelweg.

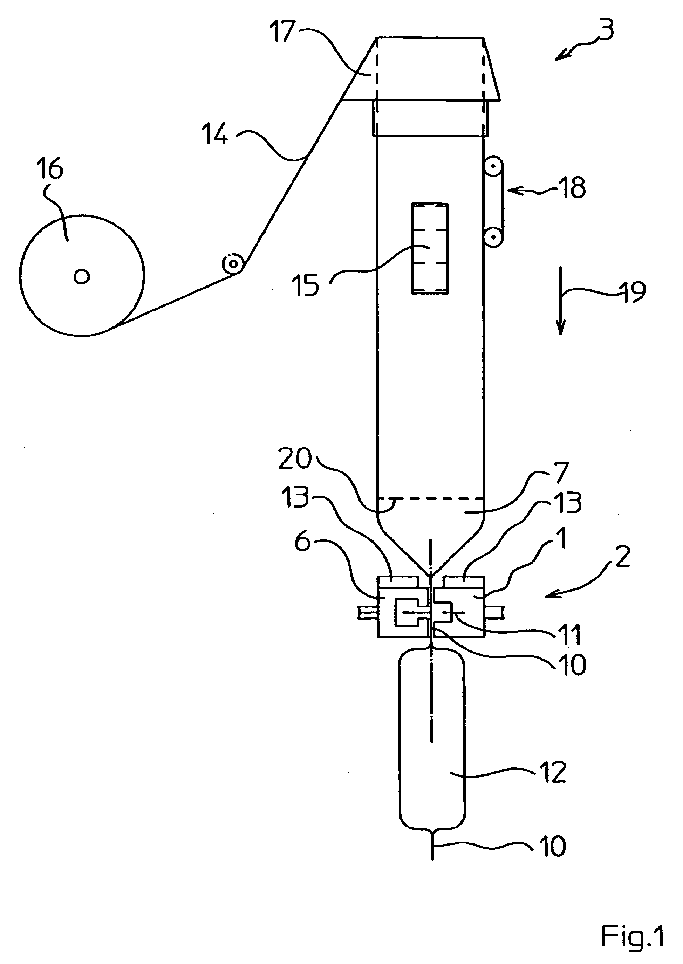

Bei einer vertikalen Schlauchbeutelmaschine 3 wird eine Folienbahn 14 mittels eines Abzuges 15 von einer Vorratsrolle 16 abgezogen, über eine Formschulter 17 gezogen und dabei zu einem Folienschlauch 7 geformt (Figur 1). Der Folienschlauch 7 wird mittels einer Längssiegeleinrichtung 18 in Transportrichtung 19 verschweißt und durch ein Füllrohr 20 befüllt. Zwei gegeneinander bewegbare, umlaufende Schweißbacken 1, 6 dienen dazu den Folienschlauch 7 quer zur Transportrichtung 19 mittels Quemähten 10 zu verschweißen. Eine Trenneinrichtung 11 in einer Schweißbacke 1 dient dazu, jeweils einen Schlauchbeutel 12 mit einer bestimmten Beutellänge vom Folienschlauch 7 abzutrennen.

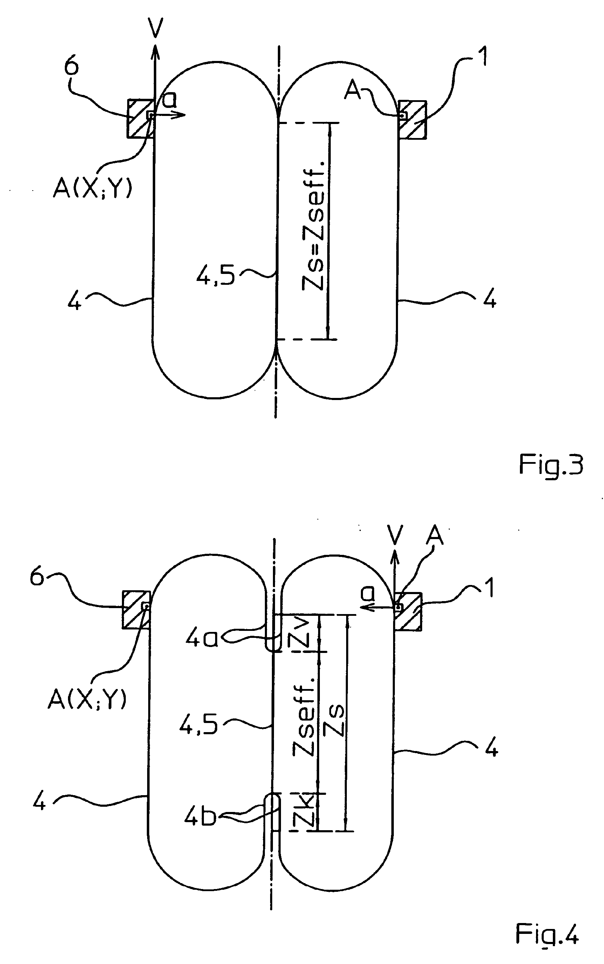

Die Schweißbacken 1, 6 werden derart betrieben, dass sie gegenläufig umlaufen, um längs eines effektiven Siegelweges Zseff die Verschweißung des mit gleicher Geschwindigkeit wie die Schweißbacken 1, 6 nach unten bewegten Folienschlauch 7 auszuführen (Figur 3). Beide Schweißbacken 1, 6 werden dazu entlang einer jeweils geschlossenen Bahn 4 bewegt. Jede Bahn 4 weist einen geraden Abschnitt 5 auf, welcher zum Anliegen an dem zwischen den Schweißbacken 1, 6 zusammengedrückten Folienschlauch 7 vorgesehen ist. Dabei werden der Folienschlauch 7 und die Schweißbacken 1, 6 in Richtung des geraden Abschnittes 5 mit konstanter Geschwindigkeit weiterbewegt, um den Folienschlauch 7 durch die Wärmeinwirkung der Schweißbacken 1, 6 innerhalb einer Siegelzeit ts zu verschweißen.

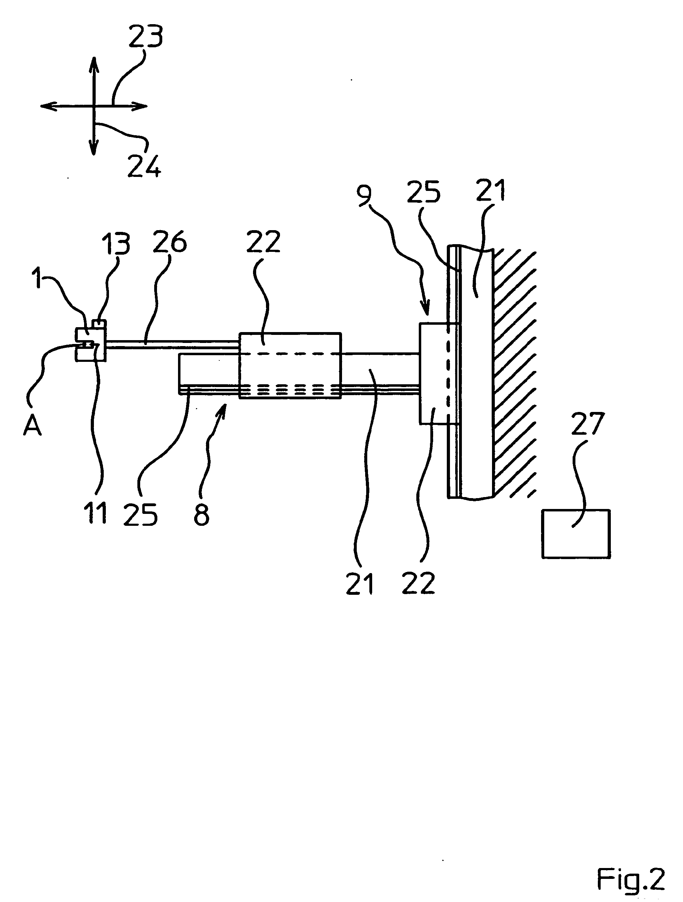

Es könnte aber auch ein Siegelweg Zs vorgegeben werden, welcher sich aus einer Vorwärmstrecke Zv für ein Vorwärmen des Gegenstandes mit vom Gegenstand beabstandeter Schweißbacke 1, dem eigentlichen, effektiven Siegelweg Zseff und einer Kühlstrecke Zk zum Abkühlen des Gegenstandes bei vom Gegenstand beabstandeter Schweißbacke 1, währenddessen Kühlluft von einem an der Schweißbacke 1 vorgesehenen Kühlluftauslass 13 auf den Gegenstand geblasen wird, zusammensetzt (Figur 4). Damit diese Umstellung der Siegelwege Zs mit allen Orts- und Zeitparametern in einfacher Weise möglich ist, wurde für die Vorwärmstrecke Zv, den effektiven Siegelweg Zseff und die Kühlstrecke Zk jeweils ein bezüglich seiner Länge und seinen Ortskoordinaten frei wählbarer, parallel zum geraden Abschnitt 5 verlaufender Abschnitt 4a, 5, 4b vorgesehen, auf dem sich der Bewegungspunkt A entlang bewegt. Dazu werden die Antriebe 8, 9 (Figur 2) derart betrieben, dass entlang einer Bahnkrümmung beide Antriebe 8, 9 gleichzeitig betrieben werden und entlang eines geraden Abschnittes 4a, 5, 4b nur der Antrieb 9 genutzt wird, damit einem Bewegungspunkt A der Schweißbacke 1, 6 in jedem die Bahn 4 beschreibenden Punkt frei ausgewählt, eine vorgegebene Geschwindigkeit V und eine vorgegebene Beschleunigung a in Richtung einer frei gewählten Bewegungsrichtung des Bewegungspunktes A zugeordnet wird. D. h. die geraden Abschnitte 4a, 5, 4b, sowie ihre genauen Längen und Ortskoordinaten können frei programmiert werden. An genau vorgegebenen Orten können also genau vorgegebene Geschwindigkeiten und, aus Gründen eines ruhigen Backenumlaufes, auch genau vorgegebene Beschleunigungen für die Schweißbacken 1, 6 vorgegeben werden. Auch die Rücksetzzeit zum erneuten Ansetzen der Schweißbacken 1, 6 an den Folienschlauch 7 und die Zykluszeit (Zeit für einen Backenumlauf) können frei ausgewählt werden. Eine entsprechende Software bringt die vorgewählten Parameter in die gewünschte Abhängigkeit und informiert über nicht zusammenpassende Eingaben.

Damit der Bewegungspunkt A, welcher mit einer Genauigkeit von 0,01 bis 0,1 mm hinsichtlich seiner Ortskoordinaten in den Richtungen 23, 24 vorgewählt werden kann, auch derart ortsgenau bewegt werden kann, sind zum Bewegen der Schweißbacken 1, 6 jeweils zwei als elektromagnetischer Linearantrieb, der nach dem Schwebebahnprinzip funktioniert, ausgestaltete, senkrecht zueinander wirkende Antriebe 8, 9 vorgesehen. Diese Antriebe 8, 9 sind mit einer Steuereinrichtung 27 verbunden, um den Bewegungspunkt A jeder Schweißbacke 1, 6 bezüglich seiner Ortskoordinaten mit einer koordinatenabhängigen Geschwindigkeit V und einer koordinatenabhängigen Beschleunigung a zu versehen. Dabei könnte auch allein aus den Geschwindigkeitswerten und den Beschleunigungswerten (Betrag und Richtung) auf die geänderten Ortskoordinaten (pro Zeiteinheit) geschlossen werden.

Zur Vermeidung irgendeiner Ortsungenauigkeit sind zum einen beide Antriebe 8, 9 getriebelos miteinander und mit einer Schweißbacke 1, 6 verbunden. Zum anderen sind ortsverändemde Elastizitäten dadurch vermieden, dass jede Schweißbacke 1, 6 über eine starre Verbindung 26 mit dem beweglichen Teil 22 des horizontal wirkenden Antriebs 8 verbunden ist, und dass das antreibende Teil 21 dieses Antriebs 8 mit dem in vertikaler Richtung beweglichen Teil 22 des anderen Antriebs 9 starr verbunden ist.

Die frei wählbaren Geschwindigkeits- und Beschleunigungswerte erlauben in jedem Punkt der Bahn 4 eine ideale Backenbewegung, auch bei relativ kompliziertem Bahnverlauf.
- 1: Schweißbacke
- 2: Quersiegelstation
- 3: Schlauchbeutelmaschine
- 4: Bahn
- 4a, 4b: Abschnitt der Bahn 4
- 5: gerader Abschnitt
- 6: gegenläufige Schweißbacke
- 7: Folienschlauch
- 8, 9: Antrieb
- 10: Quernaht
- 11: Trenneinrichtung
- 12: Schlauchbeutel
- 13: Kühlluftauslass
- 14: Folienbahn
- 15: Abzug
- 16: Vorratsrolle
- 17: Formschulter
- 18: Längssiegeleinrichtung
- 19: Transportrichtung
- 20: Füllrohr
- 21: antreibendes Teil
- 22: bewegliches Teil
- 23, 24: Richtung
- 25: Führung
- 26: starre Verbindung
- 27: Steuereinrichtung

- ts: Siegelzeit
- Zs: Siegelweg, technisch
- Zseff: effektiver Siegelweg

- A: Bewegungspunkt
- V: Geschwindigkeit
- a: Beschleunigung
- x, y: Bahnkoordinaten

## Patentansprüche

1. Verfahren zum Bewegen einer Schweißbacke (1, 6), insbesondere einer Schweißbacke (1, 6) einer Quersiegelstation (2) einer vertikalen Schlauchbeutelmaschine (3), wobei die Schweißbacke (1, 6) entlang einer geschlossenen Bahn (4) bewegt wird, und die Bahn (4) einen geraden Abschnitt (5) aufweist, welcher zum Anliegen an einem zu verschweißenden Gegenstand, insbesondere einem zwischen der Schweißbacke (1) und einer zweiten gegenläufigen Schweißbacke (6) zusammengedrückten Folienschlauches (7), vorgesehen ist, wobei der Gegenstand und die Schweißbacke (1, 6) in Richtung des geraden Abschnittes (5) mit gleicher Geschwindigkeit weiterbewegt werden, um den Gegenstand durch die Wärmeeinwirkung der Schweißbacke (1, 6) innerhalb einer Siegelzeit (ts) zu verschweißen, und wobei zwei in unterschiedliche, vorzugsweise senkrecht zueinander verlaufende Richtungen (23, 24) wirkende, die Schweißbacke (1, 6) bewegende Antriebe (8, 9) betrieben werden, um einen Umlauf der Schweißbacke (1, 6) innerhalb einer Zykluszeit (tz) zu erreichen, wobei als Antriebe (8, 9) nach dem Schwebebahnprinzip funktionierende, senkrecht zueinander wirkende elektromagnetische Linearantriebe vorgesehen sind, welche mit einer Steuereinrichtung (27) betreibbar sind, um einen Bewegungspunkt (A) bezüglich seiner Ortskoordinaten mit einer koordinatenabhängigen-Geschwindigkeit (V) und einer koordinatenabhängigen Beschleunigung (a) zu versehen und die Antriebe (8, 9) derart betrieben werden, dass entweder beide Antriebe (8, 9) gleichzeitig betrieben werden oder nur einer der Antriebe (8, 9) genutzt wird, **dadurch gekennzeichnet, dass** dem Bewegungspunkt (A) der Schweißbacke (1, 6) in jedem die Bahn (4) beschreibenden Punkt frei wählbar eine vorgegebene Geschwindigkeit (V) und eine vorgegebene Beschleunigung (a) in Richtung einer frei gewählten Bewegungsrichtung des Bewegungspunktes (A) zugeordnet wird.

2. Verfahren nach Anspruch 1, **dadurch gekennzeichnet, dass** die Schweißbacke (1, 6) einen Folienschlauch (7) mittels Quemähten (10) verschweißt, und mittels einer Trenneinrichtung (11) jeweils ein Schlauchbeutel (12) mit einer Beutellänge (L) vom Folienschlauch (7) abgetrennt wird.

3. Verfahren nach Anspruch 1 oder Anspruch 2, **dadurch gekennzeichnet, dass** der Bewegungspunkt (A) mit einer Genauigkeit von 0,01 bis 0,1 mm hinsichtlich seiner Ortskoordinaten in den Richtungen (23, 24) vorgewählt wird.

4. Verfahren nach Anspruch 1, Anspruch 2 oder Anspruch 3, **dadurch gekennzeichnet, dass** ein Siegelweg (Zs) vorgegeben wird, welcher sich aus einer Vorwärmstrecke (Zv) für ein Vorwärmen des Gegenstandes oder einer Abstreifstrecke zum Abstreifen des Gegenstandes mit vom Gegenstand beabstandeter Schweißbacke (1), dem eigentlichen, effektiven Siegelweg (Zseff) und wahlweise einer Kühlstrecke (Zk) zum Abkühlen des Gegenstandes bei vom Gegenstand beabstandeter Schweißbacke (1), währenddessen Kühlluft von einem an der Schweißbacke (1) vorgesehenen Kühlluftauslass (13) auf den Gegenstand geblasen wird, zusammensetzt.

5. Verfahren nach Anspruchs 4, **dadurch gekennzeichnet, dass** für die Vorwärmstrecke (Zv) bzw. die Abstreifstrecke, den effektiven Siegelweg (Zseff) und wahlweise die Kühlstrecke (Zk) jeweils ein bezüglich seiner Länge und seinen Ortskoordinaten frei wählbarer, parallel zum geraden Abschnitt (5) verlaufender Abschnitt (4a, 5, 4b) vorgesehen ist, auf dem sich der Bewegungspunkt (A) entlang bewegt.

6. Vorrichtung zum Ausführen des Verfahrens gemäß Anspruch 1 und Anspruch 2, sowie wahlweise einem der Ansprüche 3 bis 5, wobei die Vorrichtung einer vertikale Schlauchbeutelmaschine (3) ist, wobei die Schweißbacke (1, 6) entlang einer geschlossenen Bahn (4) bewegt wird, und die Bahn (4) einen geraden Abschnitt (5) aufweist, welcher zum Anliegen an einem zu verschweißenden Gegenstand, insbesondere einem zwischen der Schweißbacke (1) und einer zweiten gegenläufigen Schweißbacke (6) zusammengedrücki6n Folienschlauches (7), vorgesehen ist, wobei der Gegenstand und die Schweißbacke (1, 6) in Richtung des geraden Abschnittes (5) mit gleicher Geschwindigkeit weiterbewegt werden, um den Gegenstand durch die Wärmeeinwirkung der Schweißbacke (1, 6) innerhalb einer Siegelzeit (ts) zu verschweißen, und wobei zwei in unterschiedliche, vorzugsweise senkrecht zueinander verlaufende Richtungen (23, 24) wirkende, die Schweißbacke (1, 6) bewegende Antriebe (8, 9) betrieben werden, um einen Umlauf der Schweißbacke (1, 6) innerhalb einer Zykluszeit (tz) zu erreichen, wobei als Antriebe (8, 9) nach dem Schwebebahnprinzip funktionierende, senkrecht zueinander wirkende elektromagnetische Linearantriebe vorgesehen sind, welche mit einer Steuereinrichtung (27) betreibbar sind, um einen Bewegungspunkt (A) bezüglich seiner Ortskoordinaten mit einer koordinatenabhängigen Geschwindigkeit (V) und einer koordinatenabhängigen Beschleunigung (a) zu versehen und die Antriebe (8, 9) derart betriebbar sind, dass entweder beide Antriebe (8, 9) gleichzeitig betrieben werden oder nur einer der Antriebe (8, 9) genutzt wird, **dadurch gekennzeichnet, dass** dem Bewegungspunkt (A) der Schweißbacke (1, 6) in jedem die Bahn (4) beschreibenden Punkt frei wählbar eine vorgegebene Geschwindigkeit (V) und eine vorgegebene Beschleunigung (a) in Richtung einer frei gewählten Bewegungsrichtung des Bewegungspunktes (A) zugeordnet werden kann.

7. Vorrichtung nach Anspruch 6, **dadurch gekennzeichnet, dass** beide Antriebe (8, 9) getriebelos miteinander und mit der Schweißbacke (1, 6) verbunden sind.

8. Vorrichtung nach Anspruch 7, **dadurch gekennzeichnet, dass** die Schweißbacke (1, 6) über eine starre Verbindung (26) mit dem beweglichen Teil (22) eines horizontal wirkenden Antriebs (8) verbunden ist, und dass das antreibende Teil (21) dieses Antriebs (8) mit dem in vertikaler Richtung beweglichen Teil (22) des anderen Antriebs (9) starr verbunden ist.

## Claims

1. A method of moving a welding jaw (1, 6), in particular a welding jaw (1, 6) of a transverse sealing station (2) of a vertical bag-forming, -filling and -sealing machine (3), wherein the welding jaw (1, 6) is moved along a closed path (4), and the path (4) has a straight portion (5) which is provided for abutting against an article to be welded, in particular a film tube (7) which is compressed between the welding jaw (1) and a second welding jaw (6) extending in the opposite direction, wherein the article and the welding jaw (1, 6) are moved further at the same speed in the direction of the straight portion (5) in order to weld the article by the heat effect of the welding jaw (1, 6) within a welding time (ts), and wherein two drives (8, 9) are operated which move the welding jaw (1, 6) and which act in two different directions (23, 24) preferably extending at a right angle to each other, in order to achieve a circulation of the welding jaw (1, 6) within a cycle time (tz), wherein the drives (8, 9) provided are in the form of electromagnetic linear drives which operate in accordance with the suspension-railway principle and act at a right angle to each other and which are capable of being operated with a control device (27) in order to provide a movement point (A) with a co-ordinate-dependent speed (V) and a co-ordinate-dependent acceleration (a) with respect to its location co-ordinates, and the drives (8, 9) are operated in such a way that either both drives (8, 9) are operated at the same time or only one of the drives (8, 9) is used, **characterized in that** the movement point (A) of the welding jaw (1, 6) has associated with it at each point describing the path (4) in a freely selectable manner a pre-set speed (V) and a pre-set acceleration (a) in the direction of a freely selected movement direction of the movement point (A).

2. A method according to Claim 1, **characterized in that** the welding jaw (1, 6) welds a film tube (7) by means of transverse seams (10), and a film bag (12) with a bag length (L) is separated in each case from the film tube (7) by means of separating device (11).

3. A method according to Claim 1 or Claim 2, **characterized in that** the movement point (A) is pre-selected with an accuracy of from 0-01 to 0·1 mm with respect to its location co-ordinates in the directions (23, 24).

4. A method according to Claim 1, Claim 2 or Claim 3, **characterized in that** a sealing path (Zs) is pre-set which is formed from a pre-heating stretch (Zv) for pre-heating the article or a stripping path for stripping the article with a welding jaw (1) arranged at a distance from the article, the actual, effective sealing path (**Zseff**) and optionally a cooling stretch (**Zk**) for cooling the article when the welding jaw (1) is situated at a distance from the article, during which cooling air is blown onto the article from a cooling-air outlet (13) provided on the welding jaw (1).

5. A method according to Claim 4, **characterized in that** a portion (4a, 5, 4b), which is freely selectable with respect to its length and its location co-ordinates and extends parallel to the straight portion (5) and along which the movement point (A) moves, is provided in each case for the pre-heating stretch (**Zv**) or the stripping path, the effective sealing path (**Zseff**) and optionally the cooling stretch (**Zk**).

6. An apparatus for performing the method according to Claim 1 and Claim 2, and optionally any one of Claims 3 to 5, wherein the apparatus is a vertical bag-forming, -filling and -sealing machine (3), wherein the welding jaw (1, 6) is moved along a closed path (4), and the path (4) has a straight portion (5) which is provided for abutting against an article to be welded, in particular a film tube (7) which is compressed between the welding jaw (1) and a second welding jaw (6) extending in the opposite direction, wherein the article and the welding jaw (1, 6) are moved further at the same speed in the direction of the straight portion (5) in order to weld the article by the heat effect of the welding jaw (1, 6) within a welding time (ts), and wherein two drives (8, 9) are operated which move the welding jaw (1, 6) and which act in two different directions (23, 24) preferably extending at a right angle to each other, in order to achieve a circulation of the welding jaw (1, 6) within a cycle time (**tz**), wherein the drives (8, 9) provided are in the form of electromagnetic linear drives which operate in accordance with the suspension-railway principle and act at a right angle to each other and which are capable of being operated with a control device (27) in order to provide a movement point (**A**) with a co-ordinate-dependent speed (**V**) and a co-ordinate-dependent acceleration (**a**) with respect to its location co-ordinates, and the drives (8, 9) are capable of being operated in such a way that either both drives (8, 9) are operated at the same time or only one of the drives (8, 9) is used, **characterized in that** the movement point (**A**) of the welding jaw (1, 6) can have associated with it at each point describing the path (4) in a freely selectable manner a pre-set speed (**V**) and a pre-set acceleration (**a**) in the direction of a freely selected movement direction of the movement point (**A**).

7. An apparatus according to Claim 6, **characterized in that** the two drives (8, 9) are connected to each other and to the welding jaw (1, 6) without a gear mechanism.

8. An apparatus according to Claim 7, **characterized in that** the welding jaw (1, 6) is connected by way of a rigid connexion (26) to the movable part (22) of a horizontally acting drive (8), and the driving part (21) of the said drive (8) is rigidly connected to the part (22) - movable in the vertical direction - of the other drive (9).

## Revendications

1. Procédé pour déplacer une mâchoire de soudure (1, 6), en particulier une mâchoire de soudure (1, 6) d'une station de scellement transversal (2) d'une ensacheuse (3) verticale, la mâchoire de soudure (1, 6) étant déplacée le long d'une trajectoire (4) fermée, et la trajectoire (4) présentant une partie (5) droite, qui est prévue pour l'application sur un objet à souder, en particulier un tube soufflé en film (7) comprimé entre la mâchoire de soudure (1) et une seconde mâchoire de soudure (6) contraire, l'objet et la mâchoire de soudure (1, 6) étant transplantés ultérieurement en direction de la partie (5) droite à la même vitesse afin de souder l'objet sous l'effet de la chaleur de la mâchoire de soudure (1, 6) dans l'espace d'un temps de scellement (ts), et deux entraînements (8, 9) agissant dans des directions (23, 24) différentes, de préférence des directions disposées perpendiculairement entre elles, déplaçant la mâchoire de soudure (1, 6) étant exploités afin d'obtenir une rotation de la mâchoire de soudure (1, 6) dans les limites d'un temps de cycle (tz), des entraînements linéaires électromagnétiques fonctionnant selon le principe du téléphérique et agissant perpendiculairement entre eux étant prévus comme entraînements (8, 9), lesquels entraînements peuvent être exploités avec un dispositif de commande (27) pour doter un point de déplacement (A) par rapport à ses coordonnées locales d'une vitesse (V) dépendante des coordonnées et d'une accélération (a) dépendante des coordonnées et les entraînements (8, 9) étant exploités de telle sorte que soit les deux entraînements (8, 9) sont exploités en même temps ou que seul l'un des entraînements (8, 9) est utilisé, **caractérisé en ce qu'**une vitesse (V) prédéfinie et une accélération (a) prédéfinie en direction d'un sens de déplacement choisi librement du point de déplacement (A) sont attribuées au point de déplacement (A) de la mâchoire de soudure (1, 6) en tout point décrivant la trajectoire (4) avec une liberté de choix.

2. Procédé selon la revendication 1, **caractérisé en ce que** la mâchoire de soudure (1, 6) soude un tube soufflé en film (7) au moyen de soudures transversales (10), et à chaque fois un sachet tubulaire (12), avec une longueur de sachet (L) est séparée à chaque fois du tube soufflé en film (7) au moyen d'un dispositif de séparation (11).

3. Procédé selon la revendication 1 ou la revendication 2, **caractérisé en ce que** le point de déplacement (A) est présélectionné avec une précision de 0,01 à 0,1 mm par rapport à ses coordonnées locales dans les directions (23, 24).

4. Procédé selon la revendication 1, la revendication 2 ou la revendication 3, **caractérisé en ce qu'**une course de scellement (Zs) est prédéfinie, laquelle se compose d'un tronçon de préchauffage (Zv) pour un préchauffage de l'objet ou d'un tronçon de raclage pour le raclage de l'objet avec la mâchoire de soudure (1) espacée de l'objet, de la course de scellement effective proprement dite (Zseff) et en option d'un tronçon de refroidissement (Zk) pour le refroidissement de l'objet lorsque la mâchoire de soudure (1) est espacée de l'objet alors que de l'air de refroidissement est soufflé par une sortie d'air de refroidissement (13) prévue sur la mâchoire de soudure (1) sur l'objet.

5. Procédé selon la revendication 4, **caractérisé en ce que** à chaque fois une partie (4a, 5, 4b), pouvant être choisie librement en ce qui concerne sa longueur et ses coordonnées locales, agencée parallèlement à la partie (5) droite, sur laquelle le point de déplacement (A) se déplace dans la longueur, est prévu pour le tronçon de préchauffage (Zv), respectivement le tronçon de raclage, la course de scellement effective (Zseff) et en option la tronçon de refroidissement (Zk).

6. Dispositif pour la mise en oeuvre du procédé selon la revendication 1 et la revendication 2, ainsi qu'éventuellement l'une des revendications 3 à 5, le dispositif étant une ensacheuse (3) verticale, la mâchoire de soudure (1, 6) étant déplacée le long d'une trajectoire (4) fermée, et la trajectoire (4) présentant une partie (5) droite, laquelle est prévue pour l'application sur un objet à souder, en particulier un tube soufflé en film (7) comprimé entre la mâchoire de soudure (1) et une seconde mâchoire de soudure (6) contraire, l'objet et la mâchoire de soudure (1, 6) étant déplacés ultérieurement en direction de la partie (5) droite avec une vitesse identique, afin de souder l'objet sous l'effet de la chaleur de la mâchoire de soudure (1, 6) dans les limites d'un temps de scellement (ts), et deux entraînements (8, 9) agissant dans des directions (23, 24) différentes, agencées de préférence perpendiculairement entre elles, et déplaçant la mâchoire de soudure (1, 6) étant exploités afin d'obtenir une rotation de la mâchoire de soudure (1, 6) dans les limites d'un temps de cycle (tz), des entraînements linéaires électromagnétiques fonctionnant sur le principe du téléphérique et agissant perpendiculairement entre eux étant prévus comme entraînements (8, 9), lesquelles entraînements peuvent être exploités avec un dispositif de commande (27) pour adopter un point de déplacement (A) par rapport à ses coordonnées locales avec une vitesse (V) dépendante des coordonnées et d'une accélération (a) dépendante des coordonnées et les entraînements (8, 9) étant exploités de telle sorte que soit les deux entraînements (8, 9) sont exploités en même temps soit seulement l'un des entraînements (8, 9) est utilisé, **caractérisé en ce qu'**une vitesse (V) prédéfinie et une accélération (a) prédéfinie en direction d'un sens de déplacement choisi librement du point de déplacement (A) peuvent être attribuées au point de déplacement (A) de la mâchoire de soudure (1, 6) dans chaque point décrivant la trajectoire (4) avec une liberté de choix.

7. Dispositif selon la revendication 6, **caractérisé en ce que** les deux entraînements (8, 9) sont reliés sans transmission entre eux et à la mâchoire de soudure (1, 6).

8. Dispositif selon la revendication 7, **caractérisé en ce que** la mâchoire de soudure (1, 6) est reliée par une liaison (26) fixe à la partie (22) mobile d'un entraînement (8) agissant horizontalement, et **en ce que** la partie (21) d'entraînement de cet entraînement (8) est reliée de façon fixe à la partie (22), mobile dans le sens vertical, de l'autre entraînement (9).
